# EUROPÄISCHE PATENTSCHRIFT

(11) **EP 1 928 691 B1**
(45) Veröffentlichungstag und Bekanntmachung des Hinweises auf die Patenterteilung: **07.09.2011**
(21) Anmeldenummer: 06762675.4
(22) Anmeldetag: 19.07.2006
(51) Int. Cl.: B60N 2/235

(54) **BESCHLAG FÜR EINEN FAHRZEUGSITZ**
FITTING FOR A VEHICLE SEAT
FERRURE POUR SIEGE DE VEHICULE

(30) Priorität: 30.09.2005 DE 102005046806
(43) Veröffentlichungstag der Anmeldung: 11.06.2008
(73) Patentinhaber: KEIPER GmbH & Co. KG, 67657 Kaiserslautern (DE)
(72) Erfinder: PETERS, Christoph, 42929 Wermelskirchen (DE)
(74) Vertreter: Patentanwälte Hosenthien-Held und Dr. Held
(86) Internationale Anmeldenummer: PCT/EP2006/007071
(87) Internationale Veröffentlichungsnummer: WO 2007/039001

(56) Entgegenhaltungen:
- WO-A-02/058958
- WO-A-2005/023580
- PATENT ABSTRACTS OF JAPAN Bd. 009, Nr. 297 (M-432), 25. November 1985 (1985-11-25) -& JP 60 135338 A (IKEDA BUTSUSAN KK), 18. Juli 1985 (1985-07-18)

## Beschreibung

Die Erfindung betrifft einen Beschlag mit den Merkmalen des Oberbegriffs des Anspruches 1.

Aus der DE 102 53 054 A1 ist ein Beschlag dieser Art bekannt, bei dem zwei Riegel vorgesehen sind, die im Crashfall seitlich kippen, um die Zahnüberdeckung zwischen Riegel und zweitem Beschlagteil möglichst aufrecht zu erhalten. Ein weiterer Beschlag dieser Art ist aus der JP 60-135338 A bekannt, bei welcher der Exzenter die beiden Riegel mittig beaufschlagt. Je nach Toleranzen kippen die Riegel gleichsinnig oder gegensinnig zur Seite. Die WO 2005/023580 A zeigt den gleichen Sachverhalt bei einem Beschlag mit vier Riegeln.

Der Erfindung liegt die Aufgabe zu Grunde, einen Beschlag der eingangs genannten Art zu verbessern. Diese Aufgabe wird erfindungsgemäß durch einen Beschlag mit den Merkmalen des Anspruches 1 gelöst. Vorteilhafte Ausgestaltungen sind Gegenstand der Unteransprüche.

Indem jeder Riegel im Normalfall gegensinnig zu einem benachbarten Riegel kippt, ist wenigstens ein Riegel in eine Richtung und ein weiterer Riegel in die entgegengesetzte Richtung gekippt. Unabhängig von der Belastungsrichtung, die sich als Drehmoment zwischen den Beschlagteilen auswirkt, befindet sich wenigstens ein Riegel bereits in einer Postition, in welcher er die Kräfte aus dieser Belastung sofort ableiten kann. Um das Kippen der Riegel zu bewirken, weist der Exzenter für jeden Riegel einen ersten Exzenternocken und einen zweiten Exzenternocken auf, die unterschiedlich ausgebildet sind und zusammen ein Paar bilden, wobei jedem Riegel ein Paar zugeordnet ist. Vorzugsweise stehen die ersten Exzenternocken radial etwas über die zweiten Exzenternocken über, so dass die ersten Exzenternocken zuerst in Anlage an die Riegel gelangen, also unsymmetrisch beaufschlagen können.

In Umfangsrichtung des Exzenters wechselt die Reihenfolge der beiden Exzenternocken innerhalb eines Paares von Paar zu Paar, um die gegensinnigen Kippbewegungen zu erzeugen.

Mit einer erhöhten Anzahl von Riegeln kann die Festigkeit des Beschlags gegen externe Belastungen, d.h. die Widerstandsfähigkeit gegen crashbedingte Fehlfunktionen, erhöht werden. Damit kann der Beschlag gut für Gurtintegralsitze mit gegebenenfalls besonders hohen Belastungen eingesetzt werden. Indem die vorgesehenen Riegel bei verriegeltem Beschlag im Normalfall, d.h. außerhalb des Crashfalls und gegebenenfalls Missbrauchsfalls, gekippt sind, kann das in Umtangsrichtung vorhandene Spiel der beteiligten Bauteile des Beschlags in besagtem Normalfall vollständig ausgeglichen werden. Die Anzahl dieser Riegel wird verdoppelt, wenn wenigstens vier Riegel vorgesehen sind. Insgesamt bietet der erfindungsgemäße Beschlag somit sowohl einen Spielausgleich als auch eine verbesserte Festigkeit. Eine bevorzugte symmetrische Anordnung bei gleichzeitig begrenztem Bauraumbedarf ergibt sich, wenn genau vier Riegel vorgesehen sind, die um jeweils 90° versetzt um den Exzenter herum angeordnet sind, und von denen die jeweils gegenüberliegenden Riegel gleichsinnig kippen.

An jedem Riegel sind radial innen vorzugsweise zwei Riegelnocken vorgesehen, welchen je ein Exzentemocken eines Paares zugeordnet ist, damit eine definierte Beaufschlagung des Riegels mittels der Exzenternocken möglich ist. Im Normalfall beaufschlagt der Exzenter den Riegel beim Bewegen radial nach außen und/oder bei verriegeltem Beschlag nur mittels des ersten Exzenternockens an dem zugeordneten Riegelnocken, während zwischen dem zweiten Exzenternocken und dem ihm zugeordneten Riegelnocken ein Spalt vorhanden ist. Dies erzeugt auf einfache Weise, insbesondere bei einer außermittigen Anordnung, bereits beim Bewegen eine Tendenz zum Kippen des Riegels und beim Verriegeln die notwendige Querkraft zum tatsächlichen Kippen. Der Spielausgleich zwischen den beteiligten beweglichen Bauteilen lässt sich beispielsweise in definierter Weise erhalten, wenn jeder Riegel bei verriegeltem Beschlag an drei Punkten in Kontakt mit den anderen Bauteilen steht, insbesondere mit dem zugeordneten ersten Exzenternocken des Exzenters, einem benachbart nächstgelegenen Führungssegment des ersten Beschlagteils aus der Führung des Riegels und einem Zahnkranz des zweiten Beschlagteils, mit dem der Riegel verriegelt.

Im Crashfall, gegebenenfalls auch im Missbrauchsfall, stützen sich die in Belastungsrichtung gekippten Riegel - gegebenenfalls nach einer Verformung - nach Überwindung des vor der Belastung vorhandenen Spaltes vorzugsweise mit ihren beiden Riegelnocken auf den beiden zugeordneten Exzenternocken ab. Die Kraft wird insbesondere über den bislang freien Riegelnocken in den zweiten Exzenternocken geleitet. Die entgegen der Belastungsrichtung gekippten Riegel kippen im Crashfall auf die andere Seite und stützen sich direkt ohne weitere Verformung wenigstens mit jeweils einem Riegelnocken auf den zugeordneten ersten Exzenternocken ab. So liefern sie einen erhöhten Beitrag zur Festigkeit.

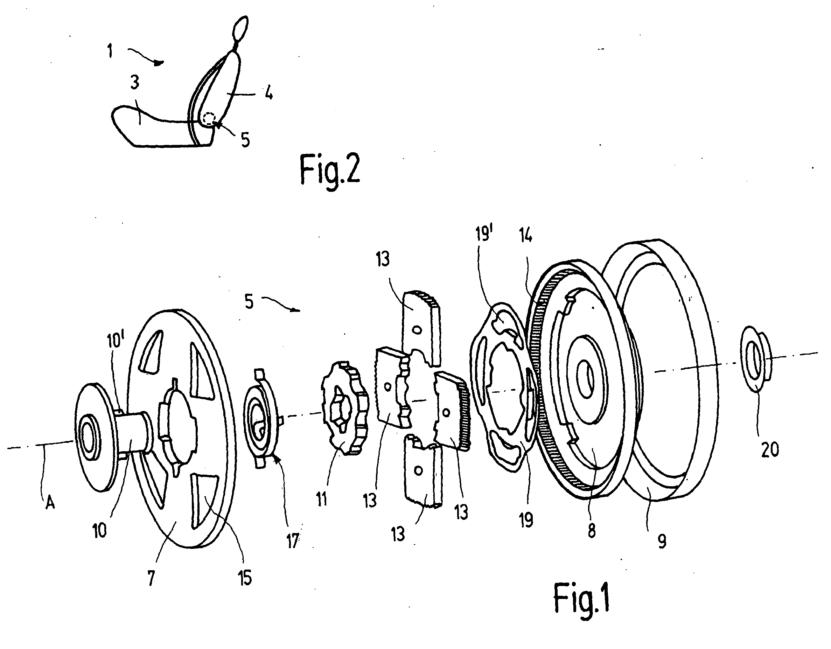

Im folgenden ist die Erfindung anhand eines in der Zeichnung dargestellten Ausführungsbeispiels mit einer Abwandlung näher erläutert. Es zeigen
- Fig. 1: eine Explosionsdarstellung des Ausführungsbeispiels,
- Fig. 2: eine schematische Darstellung eines Fahrzeugsitzes,
- Fig. 3: einen leicht perspektivisch dargestellten Schnitt durch das Ausführungs- beispiel in einer Ebene zwischen den Riegeln und der Steuerscheibe,

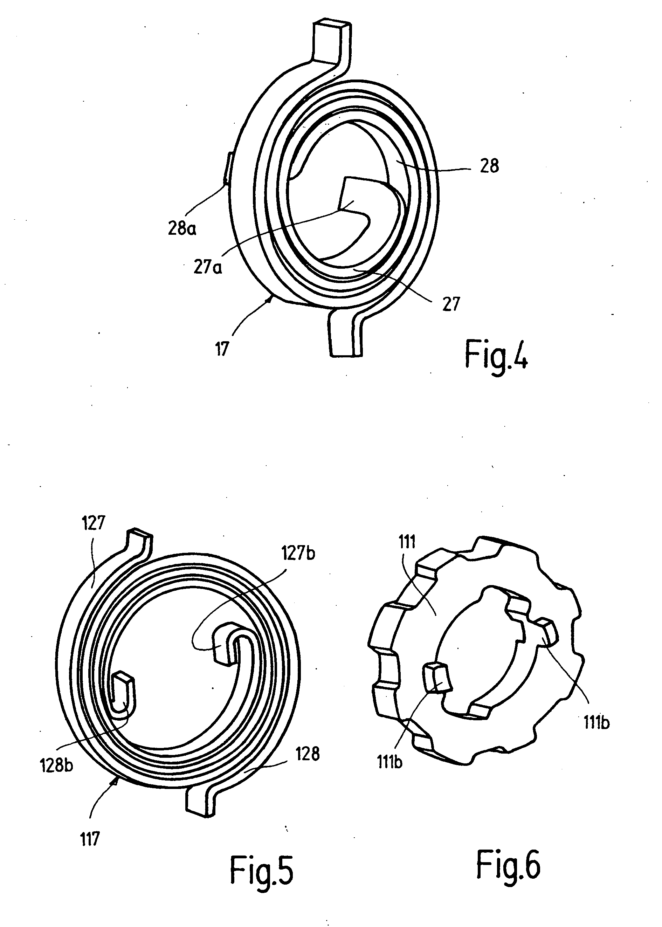

- Fig. 4: eine perspektivische Ansicht der Federanordnung des Ausführungsbei- spiels,
- Fig. 5: eine perspektivische Ansicht der Federanordnung der Abwandlung, und
- Fig. 6: eine perspektivische Ansicht des Exzenters der Abwandlung.

Ein Fahrzeugsitz 1 eines Kraftfahrzeuges weist ein Sitzteil 3 und eine Lehne 4 auf, welche mittels zweier Beschläge seitlich am Sitzteil 3 angebracht, relativ zu diesem schwenkbar und mit unterschiedlichen Neigungseinstellungen verriegelbar ist. Die Ausrichtung des Fahrzeugsitzes 1 im Kraftfahrzeug und dessen gewöhnliche Fahrtrichtung definieren die verwendeten Richtungsangaben. Der Fahrzeugsitz 1 ist als Gurtintegralsitz ausgebildet, d.h. das obere Ende eines Sicherheitsgurtes ist an der Lehne 4 befestigt, genauer gesagt an einem Gurtautomat an der Oberkante der Lehne 4. Die im Belastungsfall über den Sicherheitsgurt in die Lehne 4 eingeleiteten Kräfte sind daher über die Beschläge ins Sitzteil 3 weiterzuleiten, weshalb wenigstens der Beschlag 5 auf der höherbelasteten Fahrzeugsitzseite, an welcher der Sicherheitsgurt angebracht ist, als Hochlastbeschlag ausgebildet ist.

Der Beschlag 5 beruht auf dem gleichen Prinzip, wie der in der DE 102 53 054 A1 beschriebene Beschlag. Der Beschlag 5 ist als Rastbeschlag in einer Scheibenform ausgebildet. Der Beschlag 5 weist ein erstes Beschlagteil 7 und ein relativ zu diesem um eine Achse A verdrehbares zweites Beschlagteil 8 auf, welche zwischen sich einen Bauraum definieren. Ein reifenartiger Umklammerungsring 9 übergreift das zweite Beschlagteil 8 und ist mit dem ersten Beschlagteil 7 verbunden, wodurch die beiden Beschlagteile 7 und 8 axial zusammengehalten werden. Vorliegend ist das erste Beschlagteil 7 mit dem Sitzteil 3 und das zweite Beschlagteil 8 mit der Lehne 4 verbunden. Die umgekehrte Anordnung ist aber auch möglich.

Im Zentrum des Beschlags 5 ist ein Mitnehmer 10 angeordnet, welcher um die Achse A drehbar am zweiten Beschlagteil 8 gelagert ist. Auf dem Mitnehmer 10 sitzt drehfest oder wenigstens auf Mitnahme gekoppelt ein im Bauraum angeordneter Exzenter 11. Der Exzenter 11 wirkt auf vier gleiche Riegel 13 ein, welche um je 90° versetzt zueinander im Bauraum um den Exzenter 11 herum angeordnet sind und auf ihrer radial (bezüglich der Achse A) außen liegenden Seite mit einer Verzahnung versehen sind, um mit einem Zahnkranz 14 des als Hohlrad ausgebildeten zweiten Beschlagteils 8 zusammenzuwirken. Die Riegel 13 werden in radialer Richtung durch Führungssegmente 15 des ersten Beschlagteils 7 geführt. Das zweite Beschlagteil 8 liegt mit dem Zahnkranz 14 auf den vier Führungssegmenten 15 auf, wodurch das zweite Beschlagteil 8 am ersten Beschlagteil 7 gelagert ist.

Eine später genauer beschriebene Federanordnung 17 ist in einer zentralen Öffnung des ersten Beschlagteils 7 angeordnet und beaufschlagt den Exzenter 11, so dass dieser die Riegel 13 radial nach außen drückt, d.h. in den Zahnkranz 14, womit der Beschlag 5 verriegelt ist. Eine Steuerscheibe 19 ist im Bauraum axial zwischen den Riegeln 13 und dem zweiten Beschlagteil 8 angeordnet und sitzt vorliegend drehfest auf dem Exzenter 11. Die Steuerscheibe 19 weist vier Kulissen 19' auf, von denen jede mit einer Nase 13' je eines Riegels 13 zusammenwirkt, wobei die Nasen 13' in axialer Richtung von den Riegeln 13 abstehen. Bei einer Drehung des Mitnehmers 10 - und des damit angetriebenen Exzenters 11 und der Steuerscheibe 19 - entgegen der Kraft der Federanordnung 17 zieht die Steuerscheibe 19 die Riegel 13 radial nach innen, d.h. aus dem Zahnkranz 14, womit der Beschlag 5 entriegelt ist.

Der Mitnehmer 10 ist mittels einer Nabe in einer Öffnung des zweiten Beschlagteils 8 gelagert. Zwei angeformte Rippen 10' des Mitnehmers 10 liegen in axialer Richtung an der Innenseite des zweiten Beschlagteils 8 an, während ein auf der Außenseite des zweiten Beschlagteils 8 angeordneter Sicherungsring 20 - nach Aufclipsen beim Zusammenbau des Beschlags 5 - fest auf der Nabe des Mitnehmers 10 sitzt. Der Mitnehmer 10 ist damit axial gesichert.

Ein für die Bedienung des Beschlags 5 notwendiges Spiel könnte beim bestimmungsgemäßen Gebrauch, d.h. im Normalfall, zu einer Geräuschbildung führen. Es ist daher vorgesehen, dass bei verriegeltem Beschlag 5 bereits im Normalfall die Riegel 13 - bezüglich der radialen Richtung seitlich - verkippen können, um das Spiel (insbesondere in Umfangsrichtung) auszugleichen. Hierzu sind am Exzenter 11 erste Exzenternocken 21 und zweite Exzenternocken 22 ausgebildet, von denen die ersten Exzenternocken 21 radial etwas über die zweiten Exzenternocken 22 überstehen. Die vier ersten Exzenternocken 21 und die vier zweiten Exzenternocken 22 bilden vier Paare, wobei in Umfangsrichtung des Exzenters 11 betrachtet die Reihenfolge innerhalb eines Paares von Paar zu Paar wechselt, d.h. auf zwei zueinander benachbarte erste Exzenternocken 21 folgen zwei zueinander benachbarte zweite Exzenternocken 22 und umgekehrt. Jedes Paar ist genau einem Riegel 13 zugeordnet. An jedem Riegel 13 sind auf der dem Exzenter 11 zugewandten Seite und versetzt zur radialen Mittellinie des Riegels 13 zwei - vorzugsweise gleich ausgebildete - Riegelnocken 23 angeformt, von denen einer auf einen ersten Exzenternocken 21 und einer auf einen zweiten Exzenternocken 22 ausgerichtet und diesem zugeordnet ist.

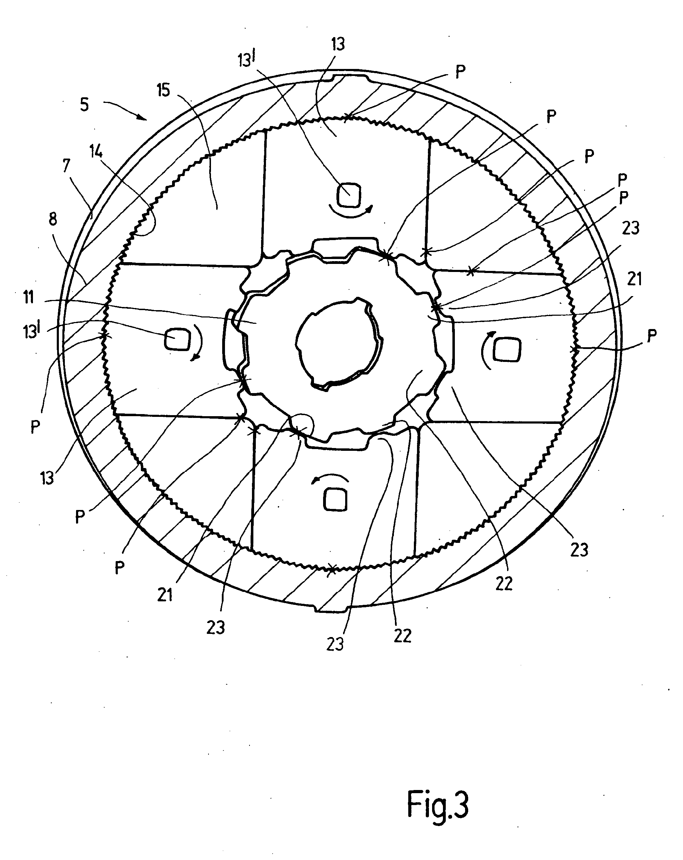

Wenn der Exzenter 11 die Riegel 13 beaufschlagt, bedeutet dies im Normalfall, dass nur der jeweils erste Exzenternocken 21 den ihm zugeordneten Riegelnocken 23 beaufschlagt, und damit den Riegel 13 radial nach außen bewegt während zwischen dem jeweils zweiten Exzenternocken 22 und dem ihm zugeordneten Riegelnocken 23 ein Spalt besteht. Sobald der Riegel 13 in den Zahnkranz 14 greift, kippt der Riegel 13, d.h. dreht sich etwas, in einer in Fig. 3 mit einem gekrümmten Pfeil angedeuteten Richtung, bis das Spiel ausgeglichen ist. Der Riegel 13 wirkt dann als Druckstrebe und steht an drei Punkten P in Kontakt mit jeweils einem anderen Bauteil des Beschlags 5, nämlich mit dem zugeordneten ersten Exzenternocken 21, d.h. dem Exzenter 11, dem benachbart nächstgelegenen Führungssegment 15, d.h. dem ersten Beschlagteil 7, und dem Zahnkranz 14, d.h. dem zweiten Beschlagteil 8. Aufgrund der abwechselnden Reihenfolge in den Paaren der Exzenternocken 21 und 22 kippen die Riegel 13 in abwechselnder Richtung, d.h. jeweils gegensinnig zu ihren jeweiligen Nachbarn. Je zwei einander gegenüberliegenden Riegel 13 kippen damit in die gleiche Richtung, welche gegensinnig zu derjenigen der jeweils anderen zwei Riegel 13 ist.

Wird nun auf die Lehne 4 eine Kraft ausgeübt, insbesondere im Crashfall, beispielsweise über den Sicherheitsgurt, erfährt das zweite Beschlagteil 8 ein Drehmoment. Das zweite Beschlagteil 8 übt dadurch mit dem Zahnkranz 14 eine Kraft in Umfangsrichtung auf die vier Riegel 13 aus. Für zwei Riegel 13 wirkt diese Kraft, d.h. Belastung, in die Richtung, in der sie gekippt sind, so dass sie zum einen die Kraft sofort weiterleiten können und zum anderen - gegebenenfalls unter elastischer und/oder plastischer Materialverformung - noch etwas weiter kippen, bis jeweils der bislang freie Riegelnocken 23 in Anlage an den zweiten Exzenternocken 22 gelangt, also kein Spalt mehr vorhanden ist. Diese kleine Bewegung der Riegel 13 führt allerdings zu einer geringfügig reduzierten Festigkeit. Bei einer weiteren Krafterhöhung wird die Kraft nun im wesentlichen über den bislang freien Riegelnocken 23 auf den Exzenter 11 weitergeleitet. Für die anderen beiden Riegel 13 wirkt die Kraft, d.h. Belastung, entgegen der Richtung, in der sie gekippt sind. Diese beiden Riegel 13 kippen daher entgegen der ursprünglichen Kipprichtung und leiten dabei die Kraft direkt über den jeweiligen ersten Exzenternocken 21 in den Exzenter 11 ein. In diesem Fall setzen diese beiden Riegel 13 der Belastung eine erhöhte Festigkeit entgegen.

Aufgrund des gegensinnigen Kippens der Riegel 13 im Normalfall stellt sich für Frontcrash und Heckcrash die gleiche Situation dar, d.h. der Kraftfluss geht jeweils durch ein Paar Riegel 13 mit zwei abgestützten Riegelnocken 23 (und dabei vorrangig über den zuvor freien Riegelnocken 23) und durch ein Paar Riegel, bei dem (weiterhin) nur ein Riegelnocken 23 abgestützt ist. Damit erhöht sich insgesamt die Festigkeit deutlich gegenüber einer Anordnung mit nur zwei Riegeln, aber auch gegenüber einer Anordnung, bei der alle Riegel in die gleiche Richtung kippen, womit einer Belastungsrichtung eine geringere Festigkeit entgegengesetzt würde.

Aus Bauraumgründen ist die Federanordnung 17 zentral im ersten Beschlagteil 7 angeordnet. Würde die Federanordnung 17 einseitig am Exzenter 11 angreifen, würden Querkräfte entstehen, welche den Exzenter 11 aus seiner zentrierten Lage in eine unsymmetrische Lage bringen würden, was seine Funktion verschlechtert. Um dies zu vermieden, umfasst die Federanordnung 17 eine erste Feder 27 und eine zweite Feder 28, welche jeweils für sich als Flachspiralfeder ausgebildet sind. Die beiden Federn 27 und 28 sind um die Achse A herum um 180° verdreht zueinander angeordnet und ineinander geschachtelt, d.h. die Abstände der jeweiligen Windungen sind so groß gewählt, dass zwischen zwei Windungen der ersten Feder 27 eine Windung der zweiten Feder 28 und zwischen zwei Windungen der zweiten Feder 28 eine Windung der ersten Feder 27 zu liegen kommt, und jeweils noch ein ausreichender Federweg für eine Kontraktion oder Expansion zur Verfügung steht. Die Abstützung der beiden Federn 27 und 28 am ersten Beschlagteil 7 erfolgt mittels ihrer äußeren Federenden, welche radial abgewinkelt sind und formschlüssig in entsprechende radiale Nuten der zentralen Öffnung des ersten Beschlagteils 7 greifen, wobei diese einander radial gegenüberliegen. Die Beaufschlagung des Exzenters 11 durch die Feder 27 und 28 erfolgt mittels der jeweiligen inneren Federenden, die vorliegend für die erste Feder 27 als erster Endfinger 27a und für die zweite Feder 28 als zweiter Endfinger 28a bezeichnet sind. Die beiden Endfinger 27a und 28a sind axial abgewinkelt, da der Exzenter 11 in einer axial versetzten Ebene angeordnet ist, und sind einander radial gegenüber liegend angeordnet. Die Endfinger 27a und 28a greifen in entsprechend geformte seitliche Aussparungen einer zentralen Öffnung des Exzenters 11, mit welcher dieser den Mitnehmer 10 aufnimmt, d.h. die Endfinger 27a und 28a enden zwischen dem Mitnehmer 10 und dem Exzenter 11. Die symmetrische Anordnung, Abstützung und Beaufschlagung der beiden Federn 27 und 28 bewirkt eine Aufhebung der Querkräfte, so dass der Exzenter 11 insgesamt querkraftfrei beaufschlagt wird.

In einer Abwandlung des Ausführungsbeispiels weist eine Federanordnung 117 eine erste Feder 127 und eine zweite Feder 128 auf, die ebenfalls ineinander geschachtelt sind, aber anstelle der Endfinger einen ersten Haken 127b bzw. einen zweiten Haken 128b aufweisen, die jeweils radial nach innen gekrümmt sind. Zur Beaufschlagung des Exzenters 111 sind an diesem axial abstehende Finger 111 b vorgesehen, welche die beiden Haken 127b und 128b umgreifen. In allen anderen Merkmalen stimmt die Abwandlung mit dem Ausführungsbeispiel überein.

Die Federn 17 und 18 bzw. 117 und 118 sollen auch dann als ineinander geschachtelt angesehen werden, wenn lediglich die Projektionen der Federn in einer Ebene senkrecht zur axialen Richtung überlappen, während die Federn axial versetzt zueinander angeordnet sind.

### Bezugszeichenliste

- 1: Fahrzeugsitz
- 3: Sitzteil
- 4: Lehne
- 5: Beschlag
- 7: erstes Beschlagteil
- 8: zweites Beschlagteil
- 9: Umklammerungsring
- 10: Mitnehmer
- 10': Rippe
- 11, 111: Exzenter
- 111b: Vorsprung
- 13: Riegel
- 13': Nase
- 14: Zahnkranz
- 15: Führungssegment
- 17, 117: Federanordnung
- 19: Steuerscheibe
- 19': Kulisse
- 20: Sicherungsring
- 21: erster Exzenternocken
- 22: zweiter Exzenternocken
- 23: Riegelnocken
- 27, 127: erste Feder
- 27a: erster Endfinger
- 28, 128: zweite Feder
- 28a: zweiter Endfinger
- 127b: erster Haken
- 128b: zweiter Haken
- A: Achse
- P: Punkt

## Patentansprüche

1. Beschlag für einen Fahrzeugsitz, insbesondere einen Kraftfahrzeugsitz, mit einem ersten Beschlagteil (7), einem relativ zum ersten Beschlagteil (7) um eine Achse (A) verdrehbaren zweiten Beschlagteil (8), einem antreibbaren und um die Achse (A) drehbar gelagerten Exzenter (11; 111) und wenigstens zwei Riegeln (13), welche vom ersten Beschlagteil (7) bezüglich der Achse (A) in radialer Richtung geführt, vom Exzenter (11; 111) beaufschlagt radial nach außen bewegbar und - bezüglich der radialen Richtung seitlich - kippbar sind, und welche zum Verriegeln des Beschlags (5) radial außen mit dem zweiten Beschlagteil (8) zusammenwirken, **dadurch gekennzeichnet, dass** der Exzenter (11; 111) für jeden Riegel (13) einen ersten Exzenternocken (21) und einen zweiten Exzenternocken (22) aufweist, die unterschiedlich ausgebildet sind und zusammen ein Paar bilden, wobei jedem Riegel (13) ein Paar zugeordnet ist, und dass in Umfangsrichtung des Exzenters (11; 111) die Reihenfolge der beiden Exzenternocken (21, 22) innerhalb eines Paares von Paar zu Paar wechselt, wodurch jeder Riegel (13) bei verriegeltem Beschlag (5) im Normalfall gegensinnig zu einem benachbarten Riegel (13) kippt.

2. Beschlag nach Anspruch 1, **dadurch gekennzeichnet, dass** wenigstens vier Riegel (13) vorgesehen sind.

3. Beschlag nach Anspruch 2, **dadurch gekennzeichnet, dass** genau vier Riegel (13) vorgesehen sind, die um jeweils 90° versetzt um den Exzenter (11 ; 111) herum angeordnet sind, und von denen die jeweils gegenüberliegenden Riegel (13) gleichsinnig kippen.

4. Beschlag nach einem der vorhergehenden Ansprüche, **dadurch gekennzeichnet, dass** die ersten Exzenternocken (21) radial etwas über die zweiten Exzenternocken (22) überstehen.

5. Beschlag nach einem der vorhergehenden Ansprüche, **dadurch gekennzeichnet, dass** ein jedem Riegel (13) radial innen zwei Riegelnocken (23) vorgesehen sind, welchen je ein Exzenternocken (21, 22) eines Paares zugeordnet ist.

6. Beschlag nach Anspruch 5, **dadurch gekennzeichnet, dass** im Normalfall der Exzenter (11; 111) den Riegel (13) beim Bewegen radial nach außen und/oder bei verriegeltem Beschlag (5) nur mittels des ersten Exzentemockens (21) an dem zugeordneten Riegelnocken (23) beaufschlagt, während zwischen dem zweiten Exzenternocken (22) und dem ihm zugeordneten Riegelnocken (23) ein Spalt vorhanden ist.

7. Beschlag nach Anspruch 6, **dadurch gekennzeichnet, dass** jeder Riegel (13) bei verriegeltem Beschlag (5) an drei Punkten (P) in Kontakt mit anderen Bauteilen (8, 11, 15) steht, insbesondere mit dem zugeordneten ersten Exzenternocken (21) des Exzenters (11; 111), einem benachbart nächstgelegenen Führungssegment (15) des ersten Beschlagteils (7) und einem Zahnkranz (14) des zweiten Beschlagteils (8).

8. Beschlag nach einem der Ansprüche 5 bis 7, **dadurch gekennzeichnet, dass** im Crashfall die in Belastungsrichtung gekippten Riegel (13) sich mit ihren Riegelnocken (23) auf beiden zugeordneten Exzenternocken (21, 22) abstützen.

9. Beschlag nach einem der Ansprüche 5 bis 8, **dadurch gekennzeichnet, dass** im Crashfall die entgegen der Belastungsrichtung gekippten Riegel (13) auf die andere Seite kippen und sich wenigstens mit jeweils einem Riegelnocken (23) auf den zugeordneten ersten Exzenternocken (21) abstürzen.

10. Fahrzeugsitz (1) mit einem Sitzteil (3) und einer Lehne (4), welche mittels wenigstens eines Beschlags (5) nach einem der vorhergehenden Ansprüche am Sitzteil (3) angebracht, relativ zu diesem schwenkbar und mit unterschiedlichen Neigungseinstellungen verriegelbar ist.

## Claims

1. A fitting for a vehicle seat, in particular a motor vehicle seat, with a first fitting part (7), a second fitting part (8) which can be rotated about an axis (A) relative to the first fitting part (7), a drivable eccentric (11; 111) which is mounted rotatably about the axis (A), and at least two locking elements (13), which are guided in the radial direction with respect to the axis (A) by the first fitting part (7), can be moved radially outward under the action of the eccentric (11; 111) and can be tilted - laterally with respect to the radial direction, and which interact radially outward with the second fitting part (8) in order to lock the fitting (5), **characterized in that** the eccentric (11; 111) for each locking element (13) has a first eccentric cam (21) and a second eccentric cam (22) which differ in design and together form a pair, with each locking element (13) being assigned one pair, and that the sequence of the two eccentric cams (21, 22) within a pair changes from pair to pair in the circumferential direction of the eccentric (11; 111), each of the locking elements (13) thus normally tilting in the opposite direction to an adjacent locking element (13), when the fitting (5) is locked.

2. The fitting as claimed in claim 1, **characterized in that** at least four locking elements (13) are provided.

3. The fitting as claimed in claim 2, **characterized in that** precisely four locking elements (13) are provided which are arranged around the eccentric (11; 111) offset by 90° in each case and of which the respectively opposite locking elements (13) tilt in the same direction.

4. The fitting as claimed in one of the preceding claims, **characterized in that** the first eccentric cams (21) protrude radially somewhat over the second eccentric cams (22).

5. The fitting as claimed in one of the preceding claims, **characterized in that** two locking cams (23) are provided radially inward on each locking element (13) and are respectively assigned an eccentric cam (21, 22) of a pair.

6. The fitting as claimed in claim 5, **characterized in that**, normally, the eccentric (11; 111) acts upon the locking element (13) during the movement radially outward and/or, when the fitting (5) is locked, acts on the assigned locking cam (23) only by means of the first eccentric cam (21) while there is a gap between the second eccentric cam (22) and the locking cam (23) assigned to it.

7. The fitting as claimed in claim 6, **characterized in that**, when the fitting (5) is locked, each locking element (13) is in contact with other components (8, 11, 15) at three points (P), in particular with the assigned first eccentric cam (21) of the eccentric (11; 111), a nearest adjacent guide segment (15) of the first fitting part (7) and a toothed ring (14) of the second fitting part (8).

8. The fitting as claimed in one of claims 5 to 7, **characterized in that**, in the event of a crash, the locking elements (13) tilted in the loading direction are supported with their locking cams (23) on the two assigned eccentric cams (21, 22).

9. The fitting as claimed in one of claims 5 to 8, **characterized in that**, in the event of a crash, the locking elements (13) tilted counter to the loading direction tilt onto the other side and are supported at least with one locking cam (23) in each case on the assigned first eccentric cam (21).

10. A vehicle seat (1) with a seat part (3) and a backrest (4) which is attached to the seat part (3) by means of at least one fitting (5) as claimed in one of the preceding claims, and which can be pivoted relative to said seat part and can be locked at different settings of the inclination.

## Revendications

1. - Ferrure pour un siège de véhicule, en particulier un siège de véhicule automobile, avec une première pièce de ferrure (7), avec une deuxième pièce de ferrure (8) pouvant pivoter autour d'un axe (A) par rapport à la première pièce de ferrure (7), avec un excentrique (11 ; 111) pouvant être entraîné et pouvant tourner autour de l'axe (A) et avec au moins deux verrous (13) qui sont guidés par la première pièce de ferrure (7) dans la direction radiale par rapport à l'axe (A), qui peuvent être déplacés radialement vers l'extérieur sous l'effet de l'excentrique (11 ; 111), qui peuvent basculer - latéralement par rapport à la direction radiale - et qui, pour verrouiller la ferrure (5), coopèrent radialement vers l'extérieur avec la deuxième pièce de ferrure (8), **caractérisée par le fait que** l'excentrique (11 ; 111) possède pour chaque verrou (13) une première came d'excentrique (21) et une deuxième came d'excentrique (22) qui sont configurées différemment et forment ensemble une paire, chaque verrou (13) étant associé à une paire, et **par le fait que**, dans la direction de la circonférence de l'excentrique (11 ; 111), l'ordre des deux cames d'excentrique (21, 22) à l'intérieur d'une paire varie de paire en paire, si bien que chaque verrou (13), lorsque la ferrure (5) est verrouillée, bascule dans le cas normal dans le sens inverse de celui d'un verrou (13) adjacent.

2. - Ferrure selon la revendication 1, **caractérisée par le fait qu'**il est prévu au moins quatre verrous (13).

3. - Ferrure selon la revendication 2, **caractérisée par le fait qu'**il est prévu précisément quatre verrous (13) qui sont disposés autour de l'excentrique (11 ; 111), chacun étant décalé de 90°, et parmi lesquels les verrous (13) opposés l'un à l'autre basculent dans le même sens.

4. - Ferrure selon l'une des revendications précédentes, **caractérisée par le fait que** les premières cames d'excentrique (21) dépassent légèrement dans la direction radiale les deuxièmes cames d'excentrique (22).

5. - Ferrure selon l'une des revendications précédentes, **caractérisée par le fait qu'**il est prévu sur chaque verrou (13), dans la direction radiale vers l'intérieur, deux cames de verrou (23) qui sont associées à chacune des cames d'excentrique (21, 22) formant une,paire.

6. - Ferrure selon la revendication 5, **caractérisée par le fait que**, normalement, l'excentrique (11 ; 111) sollicite le verrou (13) uniquement par la première came d'excentrique (21) au niveau de la came de verrou (23) qui lui est associée, dans le mouvement radial vers l'extérieur et/ou lorsque la ferrure (5) est verrouillée, tandis qu'il existe une fente entre la deuxième came d'excentrique (22) et la came de verrou (23) qui lui est associée.

7. - Ferrure selon la revendication 6, **caractérisée par le fait que**, lorsque la ferrure (5) est verrouillée, chaque verrou (13) repose par trois points (P) au contact avec d'autres pièces (8, 11, 15), en particulier avec la première came d'excentrique (21) de l'excentrique (11 ; 111) qui lui est associée, avec un segment de guidage (15) immédiatement voisin de la première pièce de ferrure (7) et avec une couronne dentée (14) de la deuxième pièce de ferrure (8).

8. - Ferrure selon l'une des revendications 5 à 7, **caractérisée par le fait qu'**en cas de collision, les verrous (13) basculés dans la direction de la sollicitation s'appuient par leurs cames de verrou (23) sur les deux cames d'excentrique (21, 22) qui leur sont associées.

9. - Ferrure selon l'une des revendications 5 à 8, **caractérisée par le fait qu'**en cas de collision, les verrous (13) basculés à l'opposé de la direction de sollicitation basculent sur l'autre côté et s'appuient chacun par au moins une came de verrou (23) sur la première came d'excentrique (21) qui leur est associée.

10. - Siège de véhicule (1) avec une pièce d'assise (3) et un dossier (3) qui est monté sur la pièce d'assise (3) à l'aide d'au moins une ferrure (5) selon l'une des revendications précédentes, qui peut basculer par rapport à celle-ci et qui peut être verrouillé dans différentes positions d'inclinaison.
